# EUROPÄISCHE PATENTSCHRIFT

(11) **EP 1 514 148 B1**
(45) Veröffentlichungstag und Bekanntmachung des Hinweises auf die Patenterteilung: **02.01.2008**
(21) Anmeldenummer: 03725153.5
(22) Anmeldetag: 06.05.2003
(51) Int. Cl.: G02B 13/20, G02B 3/04, F21V 5/00

(54) **OPTISCHE LINSE MIT WEICHZEICHENEFFEKT**
OPTICAL LENS WITH SOFT-FOCUS EFFECT
LENTILLE OPTIQUE A EFFET DE FLOU

(30) Priorität: 14.06.2002 DE 10226471
(43) Veröffentlichungstag der Anmeldung: 16.03.2005
(73) Patentinhaber: Schott AG, 55122 Mainz (DE)
(72) Erfinder: BONITZ, Ralf, 55271 Stadecken-Elsheim (DE); BIERTÜMPFEL, Ralf, 55252 Mainz (DE); SEMAR, Wolfgang, 55129 Mainz (DE); REDEY, Matthias, 55288 Spiesheim (DE)
(74) Vertreter: Fuchs
(86) Internationale Anmeldenummer: PCT/EP2003/004718
(87) Internationale Veröffentlichungsnummer: WO 2003/107063

(56) Entgegenhaltungen:
- DE-A- 3 602 262
- DE-A- 4 031 352
- US-A- 1 370 885
- PATENT ABSTRACTS OF JAPAN vol. 013, no. 406 (P-930), 8. September 1989 (1989-09-08) & JP 01 147403 A (OLYMPUS OPTICAL CO LTD), 9. Juni 1989 (1989-06-09)
- PATENT ABSTRACTS OF JAPAN vol. 015, no. 325 (M-1148), 19. August 1991 (1991-08-19) & JP 03 122902 A (KOITO MFG CO LTD), 24. Mai 1991 (1991-05-24)

## Beschreibung

Die Erfindung betrifft eine optisch abbildende Linse. Eine derartige Linse hat in erster Linie die Funktion, ein Objekt aus der Objektebene in eine Bildebene hinein abzubilden. Dabei sollen in vielen Fällen die Abbildungen und das Objekt einander ähnlich sein. Beispiele für eine derartige Linse aus dem Bereich des Kfz-Baus sind die hinlänglich bekannten Projektionslinsen. Hierauf ist die Erfindung jedoch ausdrücklich nicht beschränkt.

Bei der Anwendung einer derartigen optischen Linse, vorzugsweise einer asphärischen optischen Linse kann es zu unerwünschten Effekten kommen, die aufgrund der an sich erwünschten scharfen Abbildungskonturen zurückzuführen sind. Als Beispiel sei hier die Hell- Dunkelgrenze beim Abblendscheinwerfer eines Kfz genannt. Die scharfe Hell- Dunkelgrenze führt lediglich zu segmentartigen Ausleuchtungen von Bereichen der Straße. Erwünscht und in vom Gesetzgeber geforderten Grenzen ist jedoch auch die Ausleuchtung der angrenzenden Bereiche erforderlich.

Aus der DE 40 31 352 ist ein Scheinwerfer für Kraftfahrzeuge bekannt, bei dem die Oberfläche einer Linse mit einer Wellenstruktur zur Ablenkung der durch die Linse tretenden Lichtstrahlen versehen ist. Auch die DE 36 02 262 zeigt einen Scheinwerfer mit Strukturen auf der Linsenoberfläche eines Scheinwerfers. Wenn diese bekannten Linsen auch schon im gewissen Rahmen einen Weichzeicheneffekt haben, soll die Lichtstreuung gegenüber den bekannten Linsen noch verbessert werden.

Vor diesem Hintergrund ist es die Aufgabe der vorliegenden Erfindung, eine optische Linse mit einem Weichzeicheneffekt auf ihrer Oberfläche anzugeben, der es ermöglicht, die Konturen eines durch die Linse projizierten Objektes nicht scharf abzubilden, sondern einen weichen Übergang zu erzeugen. Gelöst wird diese Aufgabe durch eine optische Linse mit den Merkmalen des Anspruchs 1. Vorteilhafte Ausführungsformen ergeben sich aus den Unteransprüchen.

Dem gemäß wird eine optische Linse mit eingeprägter, wellenförmig verlaufender Feinstruktur auf ihrer optisch aktiven Oberfläche vorgeschlagen, welche ausgehend von der optischen Achse der Linse radial nach außen verläuft und deren Wellenbäuche und -täler um die optische Achse konzentrische Kreise bilden, wobei über diese Feinstruktur eine wellenförmig verlaufende Mikrostruktur eingeprägt ist, die konzentrisch um die optische Achse der Linse angeordnet ist und deren Wellenbäuche und -täler radial verlaufende Linien bilden, bei der die Mikrostruktur eine geringere Rauhigkeit als die Feinstruktur aufweist, die Feinstruktur eine Rauhigkeit im Bereich von 1 - 10 µm aufweist, und bei der die Mikrostruktur eine Rauhigkeit im Bereich von 0,1 - 2,5 µm aufweist. Die Oberfläche der Linse ist also gewissermaßen so geformt, dass sich zwei wellenförmig verlaufende Strukturen überlagern, wobei die Mikrostruktur die Feinstruktur moduliert, wenn man die Begrifflichkeiten aus anderen technischen Bereichen zugrunde legt. Mittels dieser optischen Linse wird beispielsweise eine scharfe Hell- Dunkelgrenze einer Lichtquelle auf einen sanften Übergang zwischen hell und dunkel abgebildet. Die Schärfe bzw. Weichheit des Übergangs kann mittels der vorgeschlagenen Strukturen geändert und gezielt eingestellt werden.

Die Strukturen können auf einer oder auf beiden Seiten der Linse vorgesehen sein.

Die Rauhigkeit der Feinstruktur ist höher als jene der Mikrostruktur.

Beide Strukturen sind dauerhaft in das Material der Linse eingebrachte Strukturen. Besonders bevorzugt sind die Strukturen auf der asphärischen Seite der Linse vorgesehen, wenn diese als solche ausgebildet ist.

Alternativ ist es möglich bei beispielsweise Kondensorlinsen für den Einsatz beispielsweise in Beamern die Strukturen auch achsparallel zu einer der beiden Hauptachsen der Linse anzubringen. Letztendlich erfordert das gewünschte Einsatzgebiet der Linse entsprechende Modifikationen.

Für spezielle Einsatzgebiete, beispielsweise im Kfz-Bau, kann vorgesehen sein, dass die Feinstruktur und die Mikrostruktur in einem konzentrisch um die optische Achse der Linse verlaufenden Oberflächenbereich eingeprägt sind. Dieser kann gemäß einer bevorzugten Ausführungsform konzentrisch zur optischen Achse auf der asphärischen Seite der Linse sein. Der innerhalb des Ringes liegende Bereich der Linse wird dann an dem Weichzeicheneffekt nicht teilhaben. Dies stellt jedoch kein Problem dar, da dieser Bereich insbesondere bei Kfz-Linsen geringe optische Bedeutung hat.

Gemäß einer besonders bevorzugten Weiterbildung ist vorgesehen, dass die Rauhigkeit der Feinstruktur ausgehend von der optischen Achse der Linse bis zu deren Peripherie abnimmt, ihre Schwingung also gewissermaßen gedämpft ist. Hierdurch wird erreicht, dass im Außenbereich weniger Lichtstreuung stattfindet und dies erlaubt es, dass Grenzwerte, die gesetzlich vorgeschrieben sind, beispielsweise im Kfz-Bau, bezüglich der Leuchtdichte eingehalten werden können.

Dies kann auch Anwendung finden bei nur ringförmigen Oberflächenbereichen, die mit den erfindungsgemäßen Strukturen versehen sind, dergestalt, dass die Rauhigkeit der Feinstruktur des der optischen Achse der Linse zugewandten Bereiches hin zum der Peripherie der Linse zugewandten Bereich abnimmt.

Die Erfindung wird anhand der Zeichnung beispielhaft näher erläutert. Hierbei zeigt:
- Figur 1: die schematische Aufsicht auf eine Linse,
- Figur 2: die halbe Sagittalschnittansicht entlang der Linie B-B in Figur 1,
- Figur 3: die gedämpfte Modulation der Feinstruktur auf der Linse,
- Figur 4: die Seitenansicht einer asphärischen Linse mit strukturiertem Teilbereich
- Figur 5: die Aufsicht auf die Linse gemäß Figur 4,
- Figur 6: schematisch eine Schnittansicht entlang der Linie A-A in Figur 5,
- Figur 7: schematisch die einstellbaren Parameter der die Feinstruktur überlagernden Mikrostruktur, und
- Figur 8: schematisch die scharfen Abbildungskonturen (a) ohne erfindungsgemäße Struktur und den Weichzeicheneffekt (b), der einen weicheren Übergang von der Hell- zur Dunkelgrenze bewirkt.

Nachfolgend bezeichnen gleiche Bezugszeichen gleiche Teile.

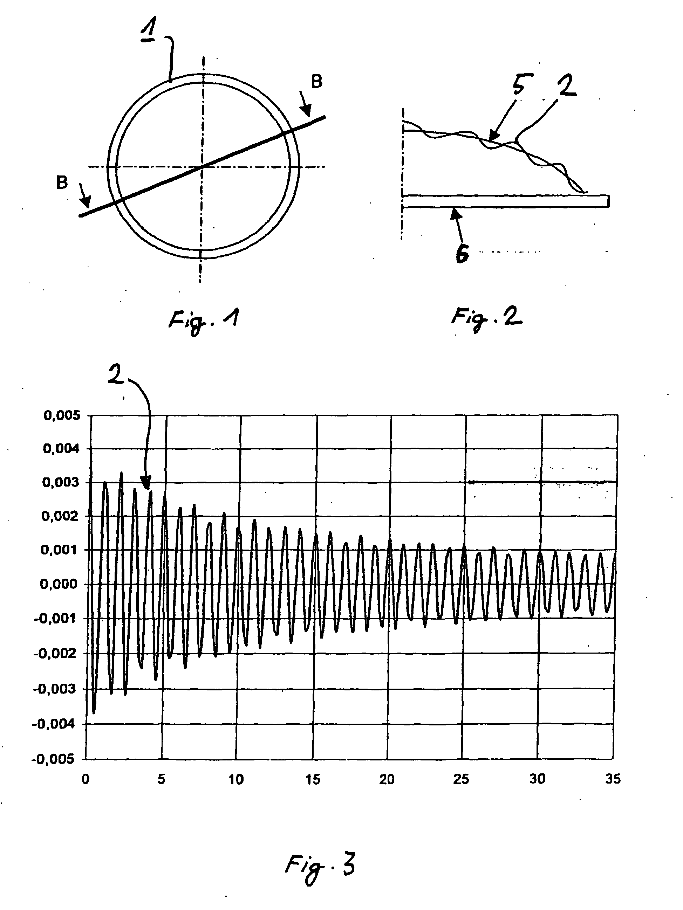

Figur 1 zeigt schematisch eine Aufsicht auf eine asphärische Linse 1. Einen Sagittalschnitt entlang der Linie B-B in Figur 1 zeigt schematisch Figur 2. Man erkennt klar die Feinstruktur 2 auf der asphärischen Seite 5 der Linse 1, wohingegen die Planseite 6 nicht feinstrukturiert ist. Aus Anschauungsgründen ist die asphärische Seite 5 vorliegend mit ausgezogener Linie dargestellt, ebenso wie der Verlauf der Feinstruktur 2. Der dargestellte Verlauf der asphärischen Seite 5 wäre der Idealverlauf der asphärischen Seite, der aber vorliegend überlagert ist durch die von der optischen Achse der Linse nach radial außen verlaufenden Feinstruktur 2.

Die Feinstruktur 2 kann - wie in Figur 3 dargestellt - so ausgebildet sein, dass der wellige Verlauf zur Peripherie hin gedämpft wird, d. h. dass die Rauhigkeit von der optischen Achse der Linse hin zur Peripherie der Linse abnimmt. Dies veranschaulicht Figur 3. Dabei ist von der "Nulllage" der optischen Achse auf der Abszisse die Strecke in mm und auf der Ordinate die Rauhigkeit in mm angegeben. Wie man sieht, beträgt die Rauhigkeit im Bereich der optischen Achse etwa 3 µm, an der Peripherie der Linse etwa 1 µm. Diese Schwingung ist gedämpft, um Streulichteffekte am äußeren Rand der Linse zu minimieren. Die Schwingungsweite beträgt vorliegend beispielhaft ca. 1 mm.

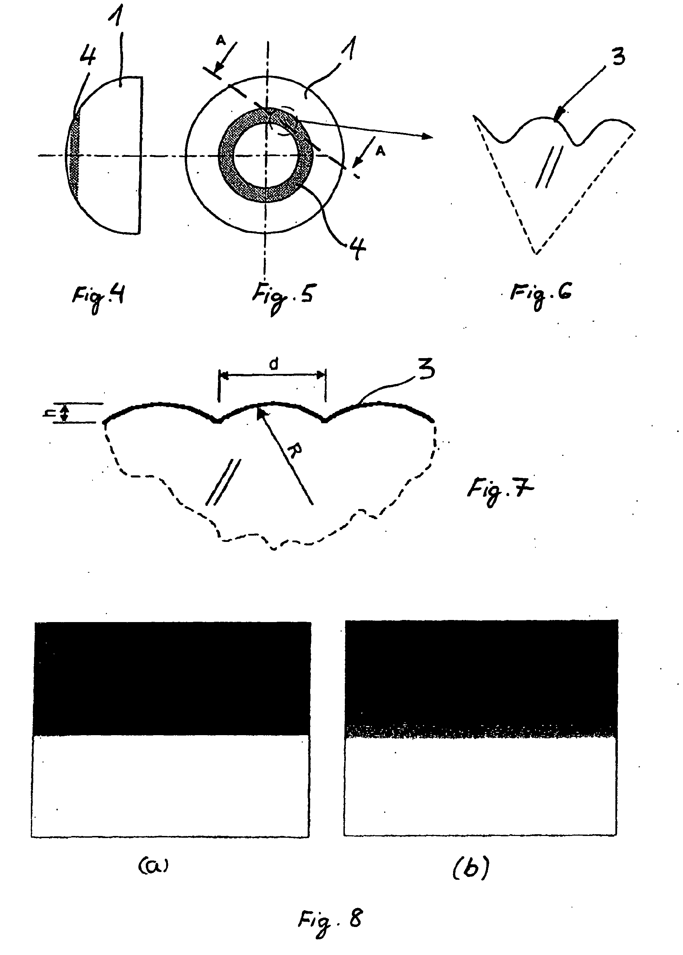

Figur 4 zeigt in schematischer Seitenansicht eine asphärische Linse 1, aus welcher ein in Projektion in Richtung der optischen Achse erkennbar ringförmiger Oberflächenbereich 4 vorgesehen ist, welcher die erfindungsgemäßen Strukturen trägt. Dies wird anhand der Figuren 5 - 7 deutlich. Figur 5 zeigt die Aufsicht auf die Linse gemäß Figur 4. Figur 6 ist eine schematische Schnittansicht entlang der Linie A-A in Figur 5. Man erkennt eine weitere Struktur, nämlich die Mikrostruktur 3, welche der Feinstruktur 2 gemäß Figur 2 und Figur 3 überlagert ist.

In Figur 7 sind die reproduzierbar herstellbaren Parameter der die Feinstruktur 2 überlagernde Mikrostruktur 3 erkennbar. Zum einen ist die Schwingungsweite d ein einstellbarer Parameter. Als besonders bevorzugten Bereich für d wird 0,2 - 0,5 mm angegeben.

Die Rauhigkeit h der Mikrostruktur beträgt vorzugsweise zwischen 0,5 - 2,5 µm. Der Radius R schließlich beträgt vorzugsweise 2 -10 mm.

Je nach gewünschtem Einsatzgebiet kommt eine entsprechende Ausbildung der Feinstruktur 2 und der Mikrostruktur 3 zur Anwendung.

Die erzielten Effekte der Linse mit einem Weichzeicheneffekt ergeben sich aus dem Vergleich der Figur 8 a mit 8 b. Figur 8 a zeigt eine scharfe Abbildungskontur einer Hell- Dunkelgrenze. Dies ist beispielsweise beim Einsatz im Kfz-Bereich als Linse in einem Abblendscheinwerfer unerwünscht. Die erfindungsgemäße Linse verschleift gewissermaßen den Übergang, wie sich aus der Figur 8 b ergibt. Die vorher scharfe Abbildungskontur wird weicher, was im Falle eines Abblendlichtes bedeutet, dass die Bereiche um die Abbildungsgrenze wesentlich weicher ausgeleuchtet werden.

## Patentansprüche

1. Optische Linse (1) für einen Scheinwerfer mit eingeprägter wellenförmig verlaufender Feinstruktur (2) auf ihrer optisch aktiven Oberfläche, welche ausgehend von der optischen Achse der Linse (1) radial nach außen verläuft und deren Wellenbäuche und -täler um die optische Achse konzentrische Kreise bilden, wobei über die Feinstruktur (2) eine wellenförmig verlaufende Mikrostruktur (3) eingeprägt ist, die konzentrisch um die optische Achse der Linse (1) angeordnet ist und deren Wellenbäuche und -täler radial verlaufende Linien bilden, bei der die Mikrostruktur (3) eine geringere Rauhigkeit als die Feinstruktur (2) aufweist, die Feinstruktur (2) eine Rauhigkeit im Bereich von 1 - 10 µm und die Mikrostruktur (3) eine Rauhigkeit (h) im Bereich von 0,1 - 2,5 µm aufweist.

2. Optische Linse nach Anspruch 1, bei der die Feinstruktur (2) und die Mikrostruktur (3) in einem konzentrisch um die Achse der Linse (1) verlaufenden Oberflächenbereich (4) eingeprägt sind.

3. Optische Linse nach Anspruch 2, bei der der Oberflächenbereich (4) konzentrisch zu der optischen Achse auf der asphärischen Seite der Linse (1) ist.

4. Optische Linse nach einem der Ansprüche 1 bis 3, bei der die Rauhigkeit der Feinstruktur (2) von der optischen Achse der Linse bis zu ihrer Peripherie abnimmt.

5. Optische Linse nach Anspruch 3, bei der die Rauhigkeit der Feinstruktur (2) des der optischen Achse der Linse (1) zugewandten Bereiches hin zum der Peripherie der Linse (1) zugewandten Bereich abnimmt.

## Claims

1. Optical lens (1) for a headlamp having an embossed undulating fine structure (2) on its optically active surface which extends radially outwards starting from the optical axis of the lens (1) and whose wave crests and troughs form concentric circles around the optical axis, there being embossed across the fine structure (2) an undulating microstructure (3) which is arranged concentrically around the optical axis of the lens (1) and whose wave crests and troughs form radially extending lines, in which the microstructure (3) exhibits less rugosity than the fine structure (2), the fine structure (2) having a rugosity in the range of 1 - 10 µm and the microstructure (3) having a rugosity (h) in the range of 0.1 - 2.5 µm.

2. Optical lens according to Claim 1, in which the fine structure (2) and the microstructure (3) are embossed in a surface area (4) extending concentrically around the axis of the lens (1).

3. Optical lens according to Claim 2, in which the surface area (4) is concentric with respect to the optical axis on the aspherical side of the lens (1).

4. Optical lens according to one of Claims 1 to 3, in which the rugosity of the fine structure (2) decreases from the optical axis of the lens up to its periphery.

5. Optical lens according to Claim 3, in which the rugosity of the fine structure (2) of the area facing the optical axis of the lens (1) decreases towards the area facing the periphery of the lens (1).

## Revendications

1. Lentille optique (1) pour un phare avec une structure fine (2) gravée sous la forme d'ondes sur sa surface optique active se propageant en partant radialement de l'axe optique de la lentille (1) vers l'extérieur et dont les bosses et les creux des ondes forment des cercles concentriques autour de l'axe optique, dans laquelle au-dessus de la structure fine (2) est gravée une microstructure (3) se propageant sous la forme d'ondes, disposée concentriquement autour de l'axe optique de la lentille (1) et dont les bosses et les creux des ondes forment des lignes se propageant radialement, la microstructure (3) présentant une rugosité inférieure à la structure fine (2), la structure fine (2) présentant une rugosité dans la plage de 1 - 10 µm et la microstructure (3) présentant une rugosité (h) dans la plage de 0,1 - 2,5 µm.

2. Lentille optique selon la revendication 1, dans laquelle la structure fine (2) et la microstructure (3) sont gravées dans un domaine superficiel (4) se propageant concentriquement autour de l'axe de la lentille (1).

3. Lentille optique selon la revendication 2, dans laquelle le domaine superficiel (4) se trouve concentriquement par rapport à l'axe optique du côté asphérique de la lentille (1).

4. Lentille optique selon une des revendications 1 à 3, dans laquelle la rugosité de la structure fine (2) diminue depuis l'axe optique de la lentille jusqu'à sa périphérie.

5. Lentille optique selon la revendication 3, dans laquelle la rugosité de la structure fine (2) du domaine dirigé vers l'axe optique de la lentille (1) diminue jusqu'au domaine dirigé vers la périphérie de la lentille (1).
